(19) **Europäisches Patentamt / European Patent Office / Office européen des brevets**

(11) **EP 2 396 530 B1**

(12) # EUROPEAN PATENT SPECIFICATION

(45) Date of publication and mention
of the grant of the patent:
**10.07.2013  Bulletin 2013/28**

(51) Int Cl.:
*F02D 41/06* (2006.01)     *F02N 11/08* (2006.01)
*F02N 19/00* (2010.01)

(21) Application number: **10703707.9**

(22) Date of filing: **27.01.2010**

(86) International application number:
**PCT/JP2010/051459**

(87) International publication number:
**WO 2010/092888 (19.08.2010 Gazette 2010/33)**

(54) **CONTROLLER OF INTERNAL COMBUSTION ENGINE**

STEUERUNG EINES VERBRENNUNGSMOTORS

DISPOSITIF DE COMMANDE DE MOTEUR À COMBUSTION INTERNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **13.02.2009  JP 2009031350**

(43) Date of publication of application:
**21.12.2011  Bulletin 2011/51**

(73) Proprietor: **TOYOTA JIDOSHA KABUSHIKI
KAISHA
Toyota-shi,
Aichi-ken, 471-8571 (JP)**

(72) Inventors:
 • **OKAMURA, Kouji**
 **Toyota-shi,
 Aichi-ken, 471-8571 (JP)**
 • **NAKAMURA, Yoshifumi**
 **Toyota-shi,
 Aichi-ken, 471-8571 (JP)**

 • **YOSHIHARA, Masatomo**
 **Toyota-shi,
 Aichi-ken, 471-8571 (JP)**
 • **UCHIDA, Akito**
 **Toyota-shi,
 Aichi-ken, 471-8571 (JP)**
 • **HATTA, Yuji**
 **Toyota-shi,
 Aichi-ken, 471-8571 (JP)**
 • **MASUDA, Satoshi**
 **Toyota-shi,
 Aichi-ken, 471-8571 (JP)**

(74) Representative: **Winter, Brandl, Fürniss, Hübner,
Röss, Kaiser, Polte - Partnerschaft
Bavariaring 10
80336 München (DE)**

(56) References cited:
**EP-A2- 1 288 472     EP-A2- 1 992 815
WO-A1-2008/110910     JP-A- 2002 364 403
JP-A- 2007 023 815**

**Description**

TECHNICAL FIELD

The present invention relates to an internal combustion engine controller that executes stop control of the engine based on an automatic stop request, and executes restart control of the engine based on a restart request.

BACKGROUND ART

In recent years, controllers of vehicle internal combustion engines have been capable of executing stop control of the engine based on an automatic stop request and restart control of the engine based on a restart request, so as to improve the fuel consumption and the emission. In an internal combustion engine that is controlled in this way, when an automatic stop request is made, for example, when the vehicle stops at traffic lights, fuel cutoff control is executed as the stop control, so that fuel injection to the engine is stopped. Accordingly, automatic stop of the engine, which is referred to as idle reduction, is executed. When a restart request is made, for example, to start the vehicle, a starting device such as a starter is actuated and fuel injection is resumed, so that the engine is restarted.

If a restart request is made before the engine is completely stopped while the above described stop control is executed, the restart control of the engine is started while the crankshaft of the engine is still rotating. In some cases, if the engine speed is relatively high when the restart control is started, autonomous recovery is possible, in which the engine is restarted by resuming fuel injection without activating the starting device. In the controller disclosed in Japanese Laid-Open Patent Publication No. 2008-267297, the engine speed at which the autonomous recovery is believed to be possible is set as a determination value for determining whether the autonomous recovery is possible. If the engine speed at which a restart request is made is greater than or equal to the determination value, the engine is restarted by resuming fuel injection without activating the starting device.

When the friction of the engine is great, energy consumed by the force of the resistance against the rotation of the crankshaft at restart of the engine, that is, the inertial energy, is greater than that in the case where the friction is small. When the inertial energy at restart of the engine is great, rotational force required to be applied to the crankshaft at the engine restart is increased.

There are individual differences in the friction of engines. Also, even in the same engine, the friction can change over time or according to the engine operating state.

Therefore, in the configuration of the above Japanese Laid-Open Patent Publication No. 2008-267297, in which a single determination value is used for determining whether the autonomous recovery needs to be carried out, even if the engine speed is greater than or equal to the determination value when a restart request is made, the rotational force of the crankshaft generated by resumption of fuel injection might be less than the rotational force that needs to be applied in the restart control, that is, than the rotational force required for autonomous recovery. In such a case, the above described autonomous recovery cannot be carried out, and the engine can stall. This problem is not only caused by variation of friction from one engine to another, but also caused by external load on the engine, such as driving force for driving auxiliary devices, even with the same engine friction. That is, since the greater the external load acting on the crankshaft, the greater the rotational force that needs to be applied to the crankshaft for restarting the engine, the above described autonomous recovery may be impossible.

In addition, document JP2002364403 A discloses a controller which determines a minimum engine speed at which autonomous recovery is possible considering the friction of the engine due to temperature and the auxiliary load.

DISCLOSURE OF THE INVENTION

Accordingly, it is an objective of the present invention to provide a controller of an internal combustion engine, which controller is capable of reliably restarting the engine when a restart request of the engine is made.

To achieve the foregoing objective, this invention provides in its first aspect a controller of an internal combustion engine in accordance with claim 1.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a diagram showing an internal combustion engine and its controller according to one embodiment, and the peripheral configuration;

Fig. 2 is a timing chart showing changes in the engine speed when the controller of Fig. 1 is executing stop control;

Fig. 3 is a diagram showing the relationship between the engine speed and a determination value in a process of the controller shown in Fig. 1;

Fig. 4 is a flowchart showing a stopping process executed by the controller shown in Fig. 1; and

Fig. 5 is a flowchart showing a restart process executed by the controller shown in Fig. 1.

BEST MODE FOR CARRYING OUT THE INVENTION

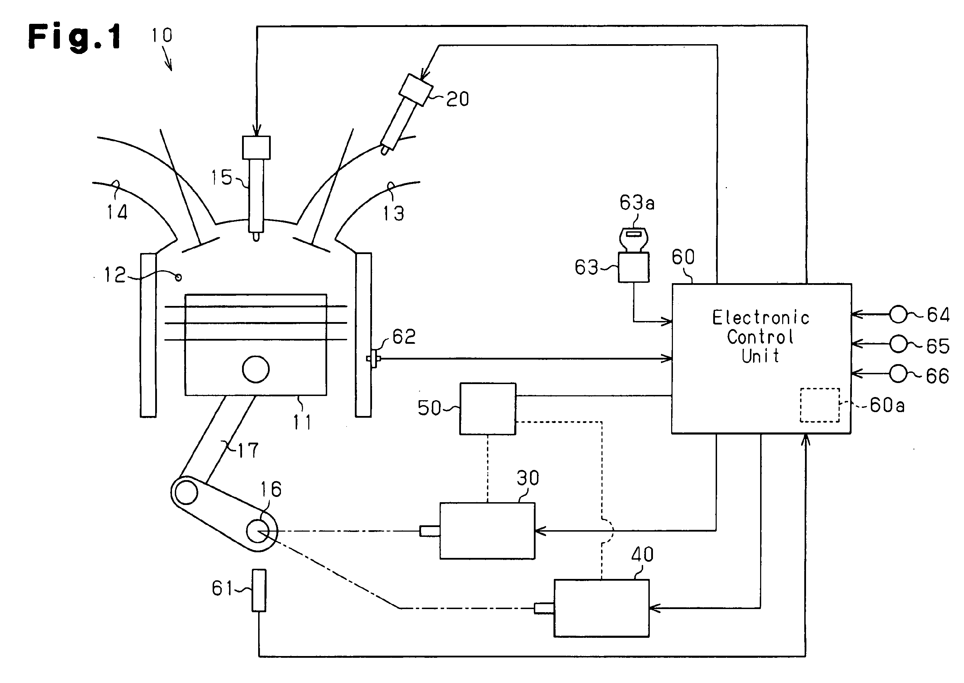

One embodiment of the present invention will now be described with reference to Figs. 1 to 5.

As shown in Fig. 1, a piston 11 is accommodated and reciprocates in the cylinder of an internal combustion engine 10. The top of the piston 11 and the inner circumferential wall of the cylinder define a combustion chamber 12, to which an intake passage 13 and an exhaust passage 14 are connected.

A fuel injection valve 20, which is supplies fuel into the intake passage 13, is provided in the intake passage 13. Air-fuel mixture is supplied to the combustion chamber 12 through the intake passage 13. The engine 10 includes an ignition plug 15, which ignites the air-fuel mixture.

A crankshaft 16 is coupled to the piston 11 with a connecting rod 17. The crankshaft 16 is rotated by reciprocation of the piston 11. An alternator 40, which generates electricity by using the rotational force of the crankshaft 16, is connected to the crankshaft 16. Electricity generated by the alternator 40 is stored in a battery 50.

Further, a starter 30 is connected to the crankshaft 16. The starter 30 applies rotational force to the crankshaft 16 when the engine 10 is started. When the electricity of the battery 50 is supplied to the starter 30, the starter 30 executes starting, or cranking, of the engine 10.

Various control procedures of the engine 10 are executed by an electronic control unit 60. The electronic control unit 60 includes a central processing unit (CPU) for executing computations related to engine control, a memory 60a for storing programs and various types of information necessary for the engine control, and an input port and an output port through which signals from and to the exterior are transmitted. The input port is connected to various sensors detecting the engine operating state. The various sensors include an engine speed sensor 61, which is located in the vicinity of the crankshaft 16 to detect the engine speed NE, a coolant temperature sensor 62 for detecting the engine coolant temperature (coolant temperature Tw) of the engine, an ignition switch 63, which outputs signals corresponding to four positions (ON, OFF, ACC, and START positions) of an ignition key 63a, a vehicle speed sensor 64 for detecting the speed of the vehicle (vehicle speed Ve) on which the engine 10 is mounted, a brake switch 65 for detecting that a brake pedal (not shown) is depressed, and a lubricant temperature sensor 66 for detecting the temperature of engine lubricant (lubricant temperature To).

The output port of the electronic control unit 60 is connected to drive circuits of the ignition plug 15, the fuel injection valve 20, the starter 30, and the alternator 40.

The electronic control unit 60 recognizes the operating state of the engine 10 based on signals from the various sensors described above and executes various control procedures. For example, the various control procedures include ignition timing control for adjusting the timing of ignition of air-fuel mixture by the ignition plug 15, fuel injection control in which the amount and timing of fuel injection from the fuel injection valve 20 are adjusted or fuel injection from the fuel injection valve 20 is temporarily stopped, and generation control in which the amount of electricity generated by the alternator 40 is controlled such that the amount of electricity stored in the battery 50 is maintained within a predetermined range. When the ignition switch 63 outputs a START signal, the electronic control unit 60 activates the starter 30 to start cranking, and performs fuel injection from the fuel injection valve 20 and ignition by the ignition plug 15, thereby starting the engine 10.

Further, when an ON signal is output from the ignition switch 63 while the normal control of the engine 10 is being executed, the electronic control unit 60 executes stop control of the engine 10 based on an automatic stop request of the engine 10 (idle reduction), and executes restart control of the engine 10 based on a restart request.

Specifically, the electronic control unit 60 determines that an automatic stop request is made when detecting that the vehicle speed Ve is zero based on a signal from the vehicle speed sensor 64, and that the brake pedal is being depressed based on a signal from the brake switch 65. In this case, the electronic control unit 60 executes fuel cutoff, that is, stops fuel injection to the engine 10, to stop the operation of the engine 10 (stop control). Thereafter, the electronic control unit 60 determines that a restart request is made when the depression of the brake pedal is detected to be cancelled based on a signal from the brake switch 65 while the engine 10 is in a stopped state. In this case, the electronic control unit 60 activates the starter 30 to start cranking so as to restart the engine 10, thereby resuming fuel injection from the fuel injection valve 20, so that the engine 10 is automatically started (restart control).

If a restart request is made before the engine 10 is completely stopped while the above described stop control is executed, the restart control of the engine 10 is started while the crankshaft 16 of the engine 10 is still rotating. In some cases, if the engine speed is relatively high when the restart control is started, autonomous recovery is possible, in which the engine 10 is restarted by resuming fuel injection without activating the starter 30. In the present embodiment, the electronic control unit 60 determines whether the starter 30 needs to be activated in the restart control based on the engine speed NE at the time when the restart request is made. When determining that the starter 30 does not need to be activated, the electronic control unit 60 executes autonomous recovery.

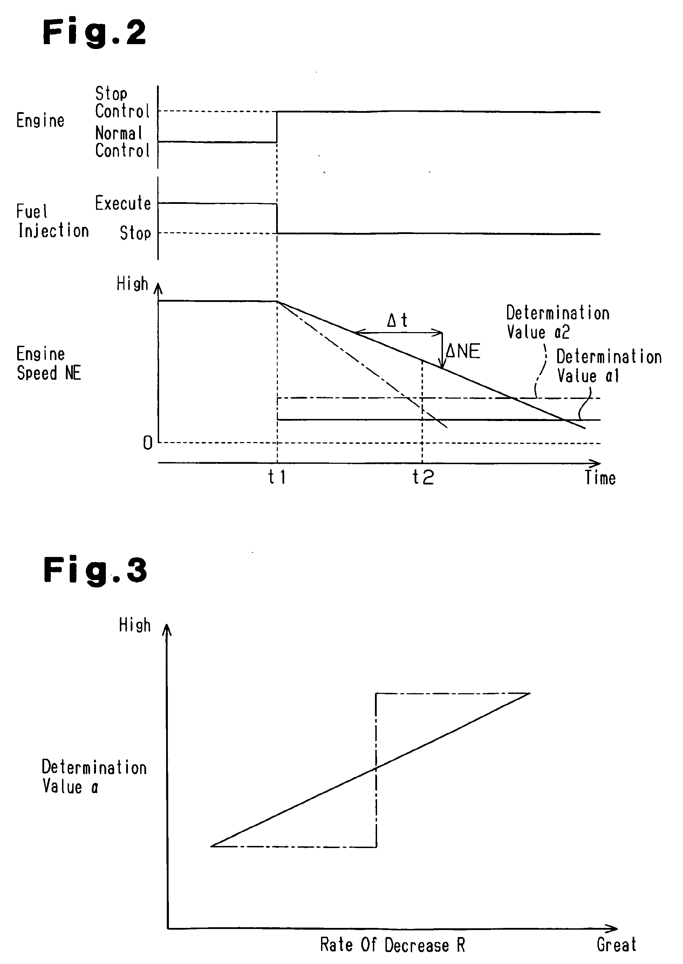

For example, when the stop control of the engine 10 is executed based on an automatic stop request at time point t1 in Fig. 2 and fuel injection is stopped, the engine speed NE gradually decreases. Then, if a restart request is made at time point t2, which is before the engine 10 is completely stopped, the restart control is started from this point on.

Fig. 2 shows changes in the engine speed NE during the execution of the stop control. Specifically, changes in the engine speed NE when the friction and the external load of the engine 10 are relatively small are shown by a solid line, and changes in the engine speed NE when the friction and the external load of the engine 10 are relatively great are shown by an alternate long and short dash line. As shown in the drawing, when the friction and the external load of the engine 10 are great, the rate of decrease R of the engine NE tends to be great. The rate of decrease R refers to the amount of decrease $\Delta NE$ of the engine speed NE per unit time At, and is obtained through the following expression (1) (indicated by At and $\Delta NE$ in Fig. 2).

$$R = \Delta NE/\Delta t = (NE_{n-1} - NE_n)/(t_n - t_{n-1}) \ \ldots \ (1)$$

$\Delta NE$: the amount of decrease of the engine speed NE per time At

$NE_{n-1}$: the engine speed NE at time point $t_{n-1}$

$NE_n$: the engine speed NE at time point $t_n$

Further, when the friction and the external load of the engine 10 are great, the rotational force that needs to be applied to the crankshaft 16 in the restart control, that is, starting rotational force F for rotating the crankshaft 16 for restarting engine 10, tends to be increased.

For example, when the amount of electricity stored in the battery 50 is low and the alternator 40 is generating electricity during the execution of the stop control and the restart control, the external load generated by the alternator 40 acts on the crankshaft 16. Thus, the rate of decrease R of the engine speed NE during the execution of the stop control is increased. On the other hand, a great starting rotational force F is required for rotating the crankshaft 16 to restart the engine during the execution of the restart control.

When the friction of the engine 10 is great, the rate of decrease R of the engine speed NE during the execution of the stop control is smaller than that when the friction is small. On the other hand, during the execution of the restart control, the resistance against the rotation of the crankshaft 16 is increased. Therefore, a great starting rotational force F is required for rotating the crankshaft 16 to restart the engine 10. There are individual differences in the friction of engines. Also, the friction can change over time or according to the engine operating state. Further, even in the same engine 10, the friction in a cold state tends to be greater than that in a warm state. As described above, the greater the rate of increase R of the engine speed NE during the execution of the stop control, the greater the required starting rotational force F is predicted to be.

Therefore, in the present embodiment, a determination value $\alpha$ for determining whether the starter 30 needs to be activated in the restart control is varied based on the rate of decrease R of the engine speed NE during the execution of the stop control. Specifically, as shown by a solid line in Fig. 3, the greater the rate of decrease R, that is, the greater the required starting rotational force F is predicted to be, the higher the determination value $\alpha$ for determining whether the starter 30 needs to be activated in the restart control is set. The determination value $\alpha$ is set, in accordance with the rate of decrease R, to a value that allows the autonomous recovery to be determined to be possible in a case where the engine speed NE at the time when a restart request is made is greater than or equal to the determination value $\alpha$ (NE $\geq \alpha$). Accordingly, if the engine speed NE at the time when a restart request is made is less than the determination value $\alpha$ (NE < $\alpha$), the rotational force of the crankshaft 16 generated by restarting the fuel injection in the restart control is predicted to be insufficient in relation to the rotational force that needs to be applied to the crankshaft 16 in the restart control, that is, the restarting rotational force F required for the autonomous recovery. Therefore, it is determined that the starter 30 needs to be activated at the resumption of fuel injection, so that additional rotational force is applied to the crankshaft 16 by the drive force of the starter 30. The relationship between the rate of decrease R and the determination value $\alpha$ shown in the map of Fig. 3 is determined in advance and stored in the memory 60a of the electronic control unit 60.

For example, as shown by the solid line in Fig. 2, the determination value $\alpha$ is set to $\alpha1$ when the rate of decrease R is relatively small. Also, as shown by the alternate long and short dash line, the determination value $\alpha$ is set to $\alpha2$, which is higher than $\alpha1$, when the rate of decrease R is relatively great.

As shown by the solid line, when the rate of decrease R of the engine speed NE is relatively small, the engine speed NE at the time point t2, at which a restart request is made, is higher than the determination value $\alpha1$ (NE > $\alpha1$). Thus, the electronic control unit 60 executes the autonomous recovery without activating the starter 30.

On the other hand, as shown by the alternate long and short dash line, when the rate of decrease R of the engine speed NE is relatively great, the engine speed NE at the time point t2, at which a restart request is made, is lower than the determination value $\alpha2$ (NE < $\alpha2$). Thus, the electronic control unit 60 starts the restart control by activating the starter 30.

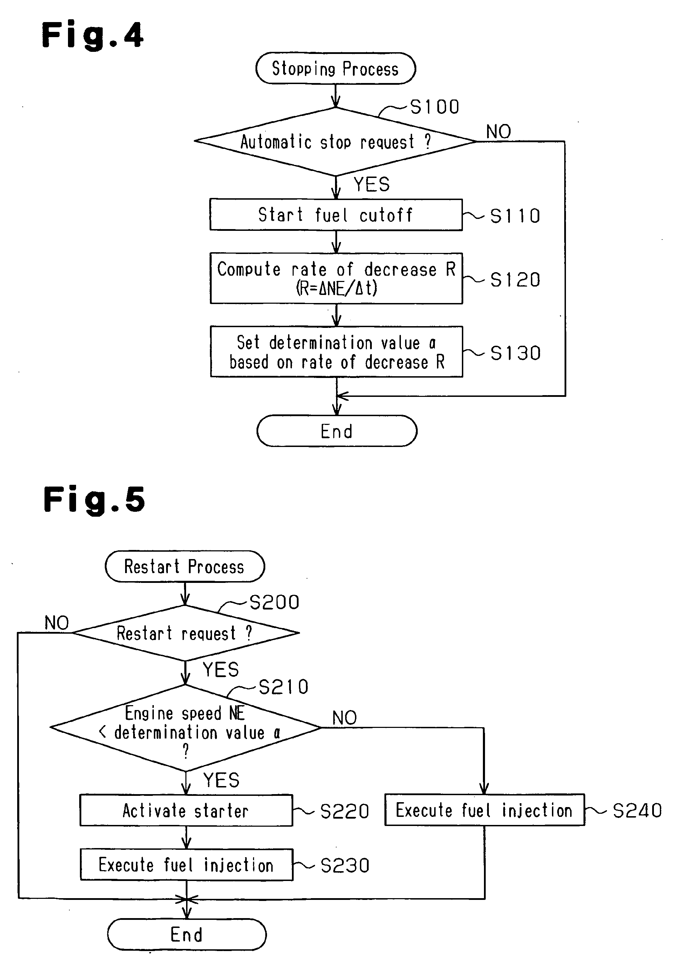

A stopping process executed by the electronic control unit 60 will now be described with reference to Fig. 4. The electronic control unit 60 has functions as a predicting section, a decreasing rate computing section, and determination value setting section in the present invention. The process shown in the flowchart of Fig. 4 is repeatedly executed at a constant time interval during the normal control of the engine 10.

When this series of procedure is started, it is first determined whether an automatic stop request has been made (step S100). Specifically, as described above, when the vehicle speed Ve is detected to be zero based on a signal from the vehicle speed sensor 64, and depression of the brake pedal is detected based on a signal from the brake switch 65, it is determined that an automatic stop request has been made.

If it is determined that an automatic stop request has not been made (step S100: NO), the current procedure is finished. Accordingly, the normal control of the engine 10 is continued.

On the other hand, if it is determined that an automatic stop request has been made (step S100: YES), fuel cutoff is started (step S110). The fuel cutoff corresponds to "stop control", which is executed based on the automatic stop request.

Subsequently, the rate of decrease R (R = $\Delta$NE/$\Delta$t) is computed using the expression (1) shown above (step S120). Accordingly, the rate of decrease R is computed that reflects the friction and the external load, which vary depending on the operating state of the engine 10 when the current procedure is executed, and the friction that is specific to the engine 10. The process of this step corresponds to the process executed by the predicting section and the decreasing rate computing section.

Based on the computed rate of decrease R, the determination value $\alpha$ is set (step S130), and the procedure is finished. Specifically, the map of Fig. 3 is referred to so that the greater the rate of decrease R, the higher the determination value $\alpha$ is set. Accordingly, the determination value $\alpha$ is set to correspond to the state of the engine 10 as described above at the time when the procedure is being executed. The process of this step corresponds to the process executed by the determination value setting section.

In this manner, every time the stop control is executed, the determination value $\alpha$ is varied based on the rate of decrease R of the engine speed NE in the current execution of the stop control.

Next, a restarting process executed by the electronic control unit 60 will be described with reference to Fig. 5. The electronic control unit 60 has a function as a determining section in the present invention. The procedure of the flowchart shown in Fig. 5 is started after the determination value $\alpha$ is set in the stopping process shown in Fig. 4. The restarting process is repeatedly executed at predetermined time intervals during the stop control, until the engine speed NE is lowered to zero and the engine 10 is completely stopped.

When this series of procedure is started, it is first determined whether a restart request has been made (step S200). Specifically, it is determined that a restart request has been made when the depression of the brake pedal is detected to be cancelled based on a signal from the brake switch 65, as described above.

If it is determined that a restart request has not been made (step S200: NO), the current procedure is finished. Accordingly, the stop control of the engine 10 is continued.

On the other hand, if it is determined that a restart request has been made (step S200: YES), it is determined at step S210 whether the engine speed NE at the time when the restart request was made is less than the determination value $\alpha$ that was set in step S130 of the previous stopping procedure (NE < $\alpha$).

If it is determined that the engine speed NE is less than the determination value $\alpha$ (NE < $\alpha$) (step S210: YES), it is determined that the starter 30 needs to be activated in the restart control.

Then, the starter 30 is activated to start cranking (step S220), and the fuel injection is executed (step S230). The processes of steps S220 and S230 correspond to "restart control" executed based on the restart request.

If it is determined that the engine speed NE is greater than or equal to the determination value $\alpha$ (NE $\geq$ $\alpha$) (step S210: NO), it is determined that the condition of NE < $\alpha$ is not met, and the starter 30 does not need to be activated. In this case, it is determined that the autonomous recovery is possible. That is, it is determined that it is possible, in the restart control, to restart the engine 10 by resuming the fuel injection to apply rotational force to the crankshaft 16 without activating the starter 30.

Then, the fuel injection is executed (step S240), and the current procedure is finished. Like the processes of steps S220 and S230, the process of step S240 corresponds to "restart control" executed based on the restart request.

After the engine speed NE is dropped to zero and the engine 10 is completely stopped by the previously executed stop control, the determination as to whether a restart request has been made is repeated. When a restart request is made, the starter 30 is activated and the fuel injection is resumed as a part of the restart control, so that the engine 10 is restarted.

The present embodiment as described above has the following advantages.

(1) The starting rotational force F, which is required for rotating the crankshaft 16 for restarting, is predicted during the stop control. The greater the predicted required starting rotational force F, the higher the determination value $\alpha$ for determining whether the starter 30 needs to be activated in the restart control is set. If the engine speed NE at the time when a restart request is made is less than the determination value $\alpha$ (NE < $\alpha$), it is determined that the starter 30 needs to be activated in the restart control. Therefore, whether the starter 30 needs to be activated in the restart control is properly determined according to the starting rotational force F required for the restart control, so that the engine 10 is properly restarted.

(2) In addition to the friction and the external load, which vary depending on the operating state of the engine 10, the rate of decrease R of the engine speed NE, which reflects the friction specific to the engine 10 is computed. The determination value $\alpha$ is set based on the computed rate of decrease R. Therefore, the required starting rotational force F can be predicted highly accurately so as to reflect the friction specific to the engine 10, which varies over time or depending on the individual differences. Thus, the determination value $\alpha$ is set to a proper value.

The present invention may be modified as follows.

In the above embodiment, the rate of decrease R of the engine speed NE is computed as the amount of reduction of the engine speed NE per unit time. However, the rate of decrease R may be computed as an amount of reduction of the engine speed NE during a predetermined period.

In the above embodiment, the greater the rate of decrease R of the engine speed NE, the greater the required starting rotational force F is predicted to be. However, it may be configured such that the lower the lubricant temperature To, which is detected based on a signal from the lubricant temperature sensor 66, the greater the required starting rotational force F is predicted to be. That is, the lower the lubricant temperature To, the greater the friction of the engine 10 tends to be. Thus, the lower the lubricant temperature To, the greater the required starting rotational force F is predicted to be. In this case also, the advantage (3) shown below is achieved in addition to the above described advantage (1).

(3) The required starting rotational force F, which changes in accordance with the operating state of the engine, is easily predicted.

Also, it may be configured such that the lower the coolant temperature Tw, which is detected based on a signal from the coolant temperature sensor 62, the greater the required starting rotational force F is predicted to be. That is, the lower the coolant temperature Tw, the greater the friction of the engine 10 tends to be. Thus, the lower the coolant temperature Tw, the greater the required starting rotational force F is predicted to be. Even in this case, the above described advantages (1) and (3) are achieved.

Further, the operating state of an auxiliary device may be monitored, and the required starting rotational force F may be predicted based on the operating state of the auxiliary device. For example, since the external load due to the operation of the auxiliary device acts on the output shaft of the engine 10 when the auxiliary device is operating, the required starting rotational force F may be predicted to be greater compared to a case where the device is not operating. For example, the electronic control unit 60 may have a function as a monitoring section that monitors the operating state of an auxiliary device, and predict that the required starting rotational force F will be greater when the device is operating compared to a case where the device is not operating. Such auxiliary devices include the above described alternator 40 and the compressor of an air conditioner. In this case also, the advantage (4) shown below is achieved in addition to the above described advantage (1).

(3) The required starting rotational force F, which changes in accordance with the external load, is easily predicted.

In the above illustrated embodiment, an example is shown in which the fuel cutoff is executed as the stop control. However, the present invention may be applied to a configuration in which control for gradually decreasing the fuel injection amount from the fuel injection valve 20 is executed as the stop control. In this case, the determination value $\alpha$ is set based on the rate of decrease R at the time when reduction of a predetermined amount, which is set in advance, is being made.

The automatic stop request and the restart request shown above are only examples, and may be modified as necessary.

The present invention may be applied to an internal combustion engine mounted in a hybrid vehicle that has an electric motor as a drive source, in addition to the engine. Even in this case, whether the electric motor needs to be activated as a starting device in the restart control is determined based on the rate of decrease R in the stop control. Thus, the advantages (1) to (5) are achieved.

In the above illustrated embodiment, the determination value $\alpha$ is changed continuously in accordance with the rate of decrease R, as shown by the solid line in Fig. 3. However, the determination value α may be discretely changed. For example, as shown by the alternate long and short dash line in Fig. 3, when the rate of decrease R is greater than a predetermined value, the determination value α may be increased from the initial value by a predetermined amount.

## Claims

1. A controller of an internal combustion engine, the engine having a crankshaft that receives rotational force from a starter when the engine is started, the controller executing stop control of the engine based on an automatic stop request, and executing restart control of the engine based on a restart request, comprising:

   a predicting section that predicts, during the execution of the stop control, a starting rotational force required for rotating the crankshaft to restart the engine;
   a setting section that sets a determination value used for determining whether the starter needs to be activated in the restart control, wherein the greater the starting rotational force predicted by the predicting section, the higher the determination value set by the setting section becomes; and
   a determining section, wherein, when an engine speed at the time when the restart request is made is lower than the determination value, the determining section determines that the starter needs to be activated in the restart control, the controller being **characterized by**: the predicting section includes a computing section that computes a rate of decrease of the engine speed at the time during the execution of the stop control, and wherein the greater the rate of decrease computed by the computing section, the higher the determination value set by the setting section becomes.

2. The controller according to claim 1, wherein the predicting section further includes a lubricant temperature detecting section that detects a temperature of engine lubricant, and wherein the lower the lubricant temperature detected by the lubricant temperature detecting section, the higher the determination value set by the setting section becomes.

3. The controller according to claim 1, wherein the predicting section further includes a coolant temperature detecting section that detects a temperature of engine coolant, and wherein the lower the coolant temperature detected by the coolant temperature detecting section, the higher the determination value set by the setting section becomes.

4. The controller according to claim 1, wherein the predicting section further includes a monitoring section that monitors an operating state of an auxiliary device operated by the engine, and wherein, when the auxiliary device is operated, the setting section sets the determination value higher than when the auxiliary devices is not operated.

## Patentansprüche

1. Steuervorrichtung eines Motors mit interner Verbrennung, wobei der Motor eine Kurbelwelle hat, welche von einem Starter eine Rotationskraft erfährt, wenn der Motor gestartet wird, wobei die Steuervorrichtung eine Stoppsteuerung des Motors auf Grundlage einer automatischen Stoppaufforderung ausführt, und eine Neustartsteuerung des Motors auf Grundlage einer Neustartaufforderung ausführt, wobei die Steuervorrichtung des Motors mit interner Verbrennung aufweist:

   einen Vorhersageabschnitt, welcher während der Ausführung der Stoppsteuerung eine für das Rotieren der Kurbelwelle zum Neustart des Motors benötigte Startrotationskraft vorhersagt;
   einen Einstellabschnitt, welcher einen Ermittlungswert einstellt, der zum Ermitteln, ob der Starter bei der Neustartsteuerung aktiviert werden muss, verwendet wird, wobei der durch den Einstellabschnitt eingestellte Ermittlungswert umso höher wird, je größer die durch den Vorhersageabschnitt vorhergesagte Startrotationskraft ist; und
   einen Ermittlungsabschnitt, wobei, wenn eine Motorgeschwindigkeit zu der Zeit, wenn die Neustartaufforderung gemacht wird, kleiner als der Ermittlungswert ist, der Ermittlungsabschnitt ermittelt, dass der Starter bei der Neustartsteuerung aktiviert werden muss, wobei die Steuervorrichtung **dadurch gekennzeichnet ist, dass**: der Vorhersageabschnitt einen Berechnungsabschnitt einschließt, der eine Rate an Abnahme der Motorgeschwindigkeit zu der Zeit während der Ausführung der Stoppsteuerung berechnet, und wobei der durch den Einstellabschnitt eingestellte Ermittlungswert umso höher wird, je größer die durch den Berechnungsabschnitt berechnete Rate an Abnahme ist.

**2.** Steuervorrichtung nach Anspruch 1, wobei der Vorhersageabschnitt darüber hinaus einen Schmiermitteltemperatur-Erfassungsabschnitt einschließt, welcher eine Temperatur eines Motorschmiermittels erfasst, und wobei der durch den Einstellabschnitt eingestellte Ermittlungswert umso höher wird, je niedriger die durch den Schmiermitteltemperatur-Erfassungsabschnitt erfasste Schmiermitteltemperatur ist.

**3.** Steuervorrichtung nach Anspruch 1, wobei der Vorhersageabschnitt darüber hinaus einen Kühlmitteltemperatur-Erfassungsabschnitt aufweist, welcher eine Temperatur eines Motorkühlmittels erfasst, und wobei der durch den Einstellabschnitt eingestellte Ermittlungswert umso höher wird, je niedriger die durch den Kühlmitteltemperatur-Erfassungsabschnitt erfasste Kühlmitteltemperatur ist.

**4.** Steuervorrichtung nach Anspruch 1, wobei der Vorhersageabschnitt darüber hinaus einen Überwachungsabschnitt einschließt, welcher einen Betriebszustand eines durch den Motor betriebenen Hilfsaggregats überwacht, und wobei, wenn das Hilfsaggregat betrieben wird, der Einstellabschnitt den Ermittlungswert höher einstellt als dann, wenn das Hilfsaggregat nicht betrieben wird.

**Revendications**

**1.** Dispositif de commande d'un moteur à combustion interne, le moteur ayant un vilebrequin qui reçoit une force de rotation à partir d'un démarreur lorsque le moteur est démarré, le dispositif de commande exécutant une commande d'arrêt du moteur sur la base d'une demande d'arrêt automatique, et exécutant une commande de redémarrage du moteur sur la base d'une demande de redémarrage, comprenant :

une section de prédiction qui prédit, pendant l'exécution de la commande d'arrêt, une force de rotation de démarrage nécessaire pour faire tourner le vilebrequin afin de redémarrer le moteur ;
une section de réglage qui règle une valeur de détermination utilisée pour déterminer si le démarreur a besoin d'être activé lors de la commande de redémarrage, où plus la force de rotation de démarrage prédite par la section de prédiction est importante, plus la valeur de détermination réglée par la section de réglage devient élevée ; et
une section de détermination, où, lorsqu'une vitesse de moteur au moment où la demande de redémarrage est réalisée est inférieure à la valeur de détermination, la section de détermination détermine que le démarreur a besoin d'être activé lors de la commande de redémarrage, le dispositif de commande étant **caractérisé en ce que** : la section de prédiction comporte une section de calcul qui calcule un taux de diminution de la vitesse du moteur à un temps pendant l'exécution de la commande d'arrêt, et où plus le taux de diminution calculé par la section de calcul est important, plus la valeur de détermination réglée par la section de réglage devient élevée.

**2.** Dispositif de commande selon la revendication 1, dans lequel la section de prédiction comporte en outre une section de détection de température de lubrifiant qui détecte une température du lubrifiant de moteur, et dans lequel plus la température du lubrifiant détectée par la section de détection de température de lubrifiant est faible, plus la valeur de détermination réglée par la section de réglage devient élevée.

**3.** Dispositif de commande selon la revendication 1, dans lequel la section de prédiction comporte en outre une section de détection de température de fluide de refroidissement qui détecte une température du fluide de refroidissement du moteur, et dans lequel plus la température du fluide de refroidissement détectée par la section de détection de température de fluide de refroidissement est faible, plus la valeur de détermination réglée par la section de réglage devient élevée.

**4.** Dispositif de commande selon la revendication 1, dans lequel la section de prédiction comporte en outre une section de surveillance qui surveille un état de fonctionnement d'un dispositif auxiliaire actionné par le moteur, et dans lequel, lorsque le dispositif auxiliaire est actionné, la section de réglage règle la valeur de détermination pour être plus élevée que lorsque le dispositif auxiliaire n'est pas actionné.

# Fig.1

EP 2 396 530 B1

# Fig.2

# Fig.3

# Fig.4

```
           ( Stopping Process )
                   │
                   │ ～S100
                  ╱ ╲
                 ╱   ╲              NO
          ⟨ Automatic stop request ? ⟩─────────┐
                 ╲   ╱                          │
                  ╲ ╱                           │
                   │ YES                        │
         ┌─────────────────────┐               │
         │   Start fuel cutoff  │～S110          │
         └─────────────────────┘               │
                   │                           │
         ┌─────────────────────┐               │
         │ Compute rate of decrease R │～S120    │
         │      (R=ΔNE/Δt)      │               │
         └─────────────────────┘               │
                   │                           │
         ┌─────────────────────┐               │
         │ Set determination value α │～S130     │
         │ based on rate of decrease R │        │
         └─────────────────────┘               │
                   │                           │
                   │◄──────────────────────────┘
                 ( End )
```

# Fig.5

```
              ( Restart Process )
                      │
                      │ ～S200
          NO         ╱ ╲
      ┌─────────⟨ Restart request ? ⟩
      │            ╲ ╱
      │             │ YES
      │             │ ～S210
      │            ╱ ╲
      │           ╱   ╲            NO
      │     ⟨ Engine speed NE        ⟩─────────────┐
      │     ⟨ < determination value α ⟩            │
      │           ╲   ?  ╱                         │
      │            ╲   ╱                           │
      │             │ YES                          │
      │   ┌──────────────────┐      ┌──────────────────────┐
      │   │  Activate starter │～S220  │ Execute fuel injection │～S240
      │   └──────────────────┘      └──────────────────────┘
      │             │                           │
      │   ┌──────────────────┐                  │
      │   │ Execute fuel injection │～S230        │
      │   └──────────────────┘                  │
      │             │                           │
      └─────────────┼───────────────────────────┘
                    │
                 ( End )
```

11

**EP 2 396 530 B1**

**REFERENCES CITED IN THE DESCRIPTION**

**Patent documents cited in the description**

- JP 2008267297 A
- JP 2002364403 A